# EUROPEAN PATENT SPECIFICATION

(11) **EP 3 091 637 B1**
(45) Date of publication and mention of the grant of the patent: **17.10.2018**
(21) Application number: 15166474.5
(22) Date of filing: 05.05.2015
(51) Int. Cl.: H02K 1/18, H02K 5/20, H02K 9/19

(54) **A STATOR FOR AN ELECTRICAL MACHINE OF A WORKING MACHINE**
STATOR FÜR EINE ELEKTRISCHE MASCHINE EINER ARBEITSMASCHINE
STATOR POUR UNE MACHINE ÉLECTRIQUE D'UNE MACHINE DE TRAVAIL

(43) Date of publication of application: 09.11.2016
(73) Proprietor: Danfoss Mobile Electrification Oy, 53600 Lappeenranta (FI)
(72) Inventor: Naumanen, Ville, 53830 Lappeenranta (FI); Piispanen, Mikko, 53900 Lappeenranta (FI); Suuronen, Anssi, 53600 Lappeenranta (FI)
(74) Representative: Finnpatent Oy

(56) References cited:
- WO-A1-2008/098723
- WO-A2-2009/122283
- DE-A1- 19 629 346
- JP-A- 2008 005 580

## Description

### Field of the disclosure

The disclosure relates generally to rotating electrical machines. More particularly, the invention relates to a stator of an outer rotor electrical machine. Furthermore, the invention relates to an outer rotor electrical machine for e.g. a working machine. Furthermore, the invention relates to a working machine.

### Background

Rotating electrical machines, such as motors and generators, generally comprise a rotor and a stator which are arranged so that a magnetic flux is developed between these two. In a radial flux electrical machine that can be an inner rotor machine or an outer rotor machine, the maximum torque is proportional to the product of the air-gap radius, the area of the air-gap surface, the magnetic flux density in the air-gap, and the linear current density in the air-gap surface of the stator. Hence, without increasing the mechanical size of the electrical machine, the maximum torque can be increased by increasing the linear current density because the magnetic flux density cannot be practically increased any more when the saturation point of iron has been exceeded. Increasing the linear current density increases, however, the resistive losses in a stator winding that produces the above-mentioned linear current density, and therefore the cooling of the stator plays a significant role in the operation of the electrical machine.

Outer rotor electrical machines where the rotor surrounds the stator are mechanically advantageous especially in conjunction with permanent magnet electrical machines having surface mounted permanent magnets. In an outer rotor electrical machine the centrifugal force presses the surface mounted permanent magnets against the core structure of the rotor whereas in an inner rotor electrical machine the centrifugal force tends to disengage the surface mounted permanent magnets from the core structure of the rotor. Furthermore, in some cases, the cooling of the rotor can be easier to arrange in an outer rotor electrical machine than in an inner rotor electrical machine. The stator of an outer rotor electrical machine comprises typically a core structure made of ferromagnetic material and windings whose coil sides are located in slots of the core structure. In order to arrange cooling, the stator typically further comprises a cooling element located in a cavity constituted by the yoke of the core structure. The cooling element is in a heat conductive relation with the yoke and the cooling element may comprise cooling channels for conducting cooling fluid such as for example water. The cooling element can be a part of a frame structure of the electrical machine. An outer rotor electrical machine of the kind mentioned above is described for example in publication DE19629346. Publication WO2008098723 describes a linear actuator which comprises a rotor surrounding a stator.

An inconvenience related to a cooling arrangement of the kind described above is that the mechanical contact between the cooling element and the yoke tends to loosen when the cooling element is cooled because cooling decreases the dimensions of the cooling element in accordance with the thermal expansion coefficient of the material of the cooling element. Thus, a temperature difference between the yoke being cooled and the cooling element increases the heat resistance from the yoke to the cooling element and thereby impairs the cooling. The above-mentioned technical problem is not present in inner rotor electrical machines such as e.g. the inner rotor electrical machines described in publications JP2008005580 and WO2009122283.

### Summary

The following presents a simplified summary in order to provide basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

In accordance with the invention, there is provided a new stator for an outer rotor electrical machine. A stator according to the invention comprises:
- a core structure comprising ferromagnetic material and comprising a yoke and stator teeth connected to the yoke,
- windings at least partially located in the stator slots between the stator teeth, and
- a cooling element located in a cavity constituted by the yoke and being in a heat conductive relation with the yoke, a first surface of the cooling element having a mechanical contact with a second surface of the cavity so as to provide the heat conductive relation.

The above-mentioned first surface of the cooling element and the second surface of the cavity are conical so as to facilitate arranging the mechanical contact between the yoke and the cooling element. The conical shapes of the first and second surfaces make it possible to maintain the heat conductive relation with the aid of one or more tensioning devices, e.g. screws and/or springs, for generating axial force pressing the cooling element against the yoke in the axial direction.

In accordance with the invention, there is provided also a new outer rotor electrical machine. The electrical machine comprises a stator and a rotor, wherein the stator is according to the invention.

In accordance with the invention, there is provided also a new working machine that can be, for example but not necessarily, a tractor, a bucket charger, a road drag, an excavator, a bulldozer, a stone crusher, or a wood chipping machine. A working machine according to the invention comprises:
- a combustion engine,
- one or more functional elements to be driven with mechanical power, and
- an electromechanical power transmission chain between the combustion engine and the one or more functional elements.

The electromechanical transmission chain comprises at least one outer rotor electrical machine comprising a stator according to the invention.

The above-mentioned one or more functional elements of the working machine may comprise for example a hydraulic pump of a hydraulic system of the working machine, wheels of the working machine, and/or chain tracks of the working machine.

The working machine comprises, advantageously but not necessarily, a liquid cooling system configured to cool both a hydraulic system of the working machine and the electromechanical power transmission chain.

A number of exemplifying and non-limiting embodiments of the invention are described in accompanied dependent claims.

Various exemplifying and non-limiting embodiments of the invention both as to constructions and to methods of operation, together with additional objects and advantages thereof, will be best understood from the following description of specific exemplifying and non-limiting embodiments when read in connection with the accompanying drawings.

The verbs "to comprise" and "to include" are used in this document as open limitations that neither exclude nor require the existence of unrecited features. The features recited in dependent claims are mutually freely combinable unless otherwise explicitly stated. Furthermore, it is to be understood that the use of "a" or "an", i.e. a singular form, throughout this document does not exclude a plurality.

### Brief description of the figures

Exemplifying and non-limiting embodiments of the invention and their advantages are explained in greater detail below in the sense of examples and with reference to the accompanying drawings, in which:
figure 1a shows a section view of an outer rotor electrical machine according to an exemplifying and non-limiting embodiment of the invention, the section being taken along a plane parallel with the geometrical rotation axis of the rotor of the electrical machine,
figure 1b shows a view of a section taken along the line A-A shown in figure 1a,
figure 2 shows a section view of an outer rotor electrical machine according to an exemplifying and non-limiting embodiment of the invention, the section being taken along a plane parallel with the geometrical rotation axis of the rotor of the electrical machine,
figure 3a shows a section view of an outer rotor electrical machine according to an exemplifying and non-limiting embodiment of the invention, the section being taken along a plane parallel with the geometrical rotation axis of the rotor of the electrical machine,
figure 3b shows a detail of the outer rotor electrical machine illustrated in figure 3a, and
figure 4 shows a schematic illustration of a working machine according to an exemplifying and non-limiting embodiment of the invention.

### Description of the exemplifying embodiments

The specific examples provided in the description given below should not be construed as limiting the scope and/or the applicability of the appended claims. Lists and groups of examples provided in the description given below are not exhaustive unless otherwise explicitly stated.

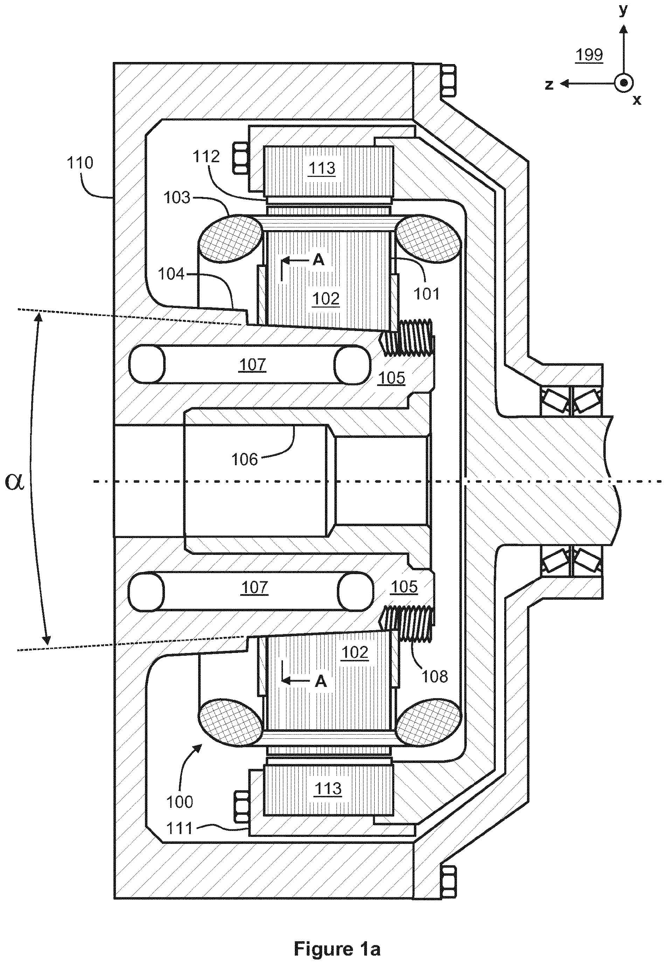

Stators according to exemplifying and non-limiting embodiments of the invention are described below with references to figures 1a and 1b, figure 2, and figures 3a and 3b.

Figure 1a shows a section view of an outer rotor electrical machine according to an exemplifying and non-limiting embodiment of the invention, where the section has been taken along a plane parallel with the yz-plane of a coordinate system 199. The electrical machine comprises a stator 100 and a rotor 111. The rotational axis of the rotor is parallel with the z-axis of the coordinate system 199. In the exemplifying case illustrated in figure 1a, the outer rotor electrical machine is a permanent magnet machine whose rotor 111 comprises permanent magnet material 112. The rotor 111 further comprises a yoke 113 made of electrically insulated ferromagnetic sheets stacked in the axial direction, i.e. in the z-direction of the coordinate system 199. The outer rotor electrical machine could as well be for example an induction machine whose rotor comprises a squirrel cage winding.

The stator 100 comprises a core structure 101 made of, or at least comprising, ferromagnetic material. The core structure 101 comprises a yoke 102 and stator teeth connected to the yoke. The core structure 101 may comprise a stack of ferromagnetic sheets that are electrically insulated from each other and stacked in the axial direction, i.e. in the z-direction of the coordinate system 199. As another exemplifying alternative, the core structure 101 may comprise ferrite or iron powder composites such as SOMALOY® (Soft Magnetic Composite). The stator 100 comprises windings 103 whose coil sides are located in the stator slots between the stator teeth. The stator 100 comprises a cooling element 104 located in a cavity constituted by the yoke 102. The cooling element 104 comprises cooling channels 107 for conducting water or some other suitable liquid or gaseous cooling fluid. A first surface of the cooling element 104 has a mechanical contact with a second surface of the cavity so as to provide a heat conductive relation between the cooling element 104 and the yoke 102. In the exemplifying case illustrated in figure 1a, the cooling element 104 is a part of a frame structure 110 that constitutes a part of the outer casing of the outer rotor electrical machine. As illustrated in figure 1a, the mutually contacting surfaces of the cooling element 104 and the cavity of the yoke 102 are conical so as to facilitate arranging the mechanical contact between the yoke 102 and the cooling element 104. The conical shapes of the mutually contacting surfaces make it possible to maintain the heat conductive relation with the aid of one or more tensioning devices arranged to generate axial force pressing the cooling element 104 against the conical cavity of the yoke 102 in the axial direction. In the exemplifying case illustrated in figure 1a, the tensioning devices comprise screws arranged to tighten the cooling element 104 axially against the yoke 102. In figure 1a, one of the screws is denoted with a reference number 108. The coning angle α of the conical surfaces can be for example on the range from 0.5 degrees to 45 degrees.

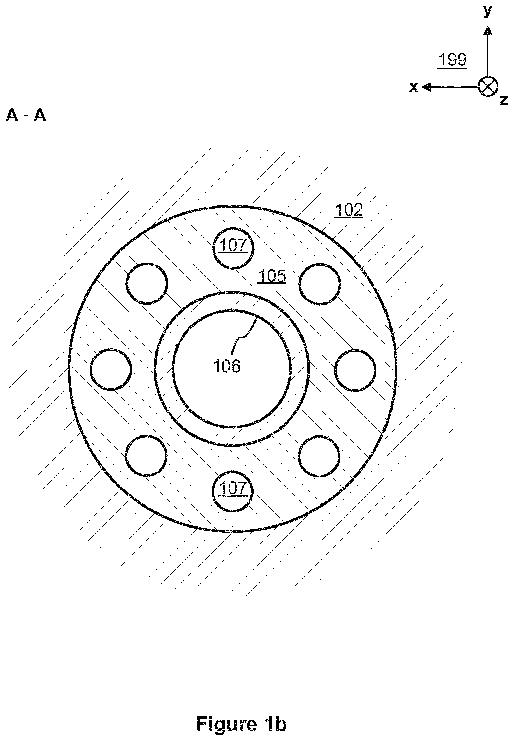

In the exemplifying outer rotor electrical machine illustrated in figure 1a, the cooling element 104 comprises a first section 105 and a second section 106. The second section 106 is radially surrounded by the first section 105 so that the second section has a mechanical contact with the first section. Figure 1b shows a view of a section taken along the line A-A shown in figure 1a. The section plane is parallel with the xy-plane of the coordinate system 199. The first section 105 comprises the above-mentioned conical contact surface of the cooling element 104. In the exemplifying case illustrated in figure 1a, the second section 106 is a tubular sleeve located in a cavity of the first section 105 but it is also possible that the second section is for example a solid, i.e. non-hollow, bar. The first section 105 is made of first material that has a first thermal expansion coefficient and the second section 106 is made of second material that has a second thermal expansion coefficient smaller than the first thermal expansion coefficient of the first section. Therefore, the second section 106 is capable of acting against loosening of the mechanical contact between the cooling element 104 and the yoke 102 when the cooling element is being cooled by the cooling fluid. The first section 105 may comprise for example aluminum and the second section 106 may comprise for example steel. The second section 106 can be arranged to have pretension tending to radially expand the first section 105. The pretension can be achieved for example by using an interference fit between the first and second sections 105 and 106. In this case, the second section 106 can be installed in the first section 105 so that the first section is hot and the second section is cold during the installation and/or simply by using a sufficiently strong force. It is also possible that the first section 105 is cast around the second section 106. It is, however, worth noting that the principle based on the conical contact surfaces of the cooling element 104 and the yoke 102 is applicable also without the second section 106 of the cooling element.

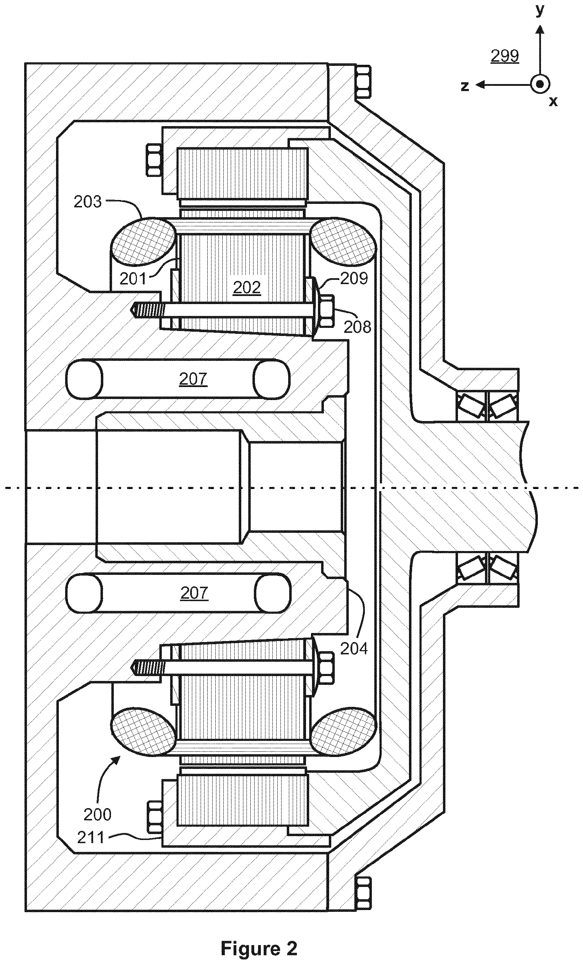

Figure 2 shows a section view of an outer rotor electrical machine according to an exemplifying and non-limiting embodiment of the invention, where the section has been taken along a plane parallel with the yz-plane of a coordinate system 299. The electrical machine comprises a stator 200 and a rotor 211. The rotational axis of the rotor 211 is parallel with the z-axis of the coordinate system 299. The stator 200 comprises a core structure 201 comprising ferromagnetic material. The core structure 201 comprises a yoke 202 and stator teeth connected to the yoke. The stator 200 comprises windings 203 whose coil sides are located in the stator slots between the stator teeth. The stator 200 comprises a cooling element 204 located in a cavity constituted by the yoke 202. The cooling element 204 comprises cooling channels 207 for conducting water or some other suitable cooling fluid. The mutually contacting surfaces of the yoke 202 and the cooling element 204 are conical so as to facilitate arranging a heat conductive relation between the yoke 202 and the cooling element 204. The conical shapes of the mutually contacting surfaces make it possible to maintain the heat conductive relation with the aid of one or more tensioning devices arranged to generate axial force pressing the cooling element 204 against the conical cavity of the yoke 202 in the axial direction. In the exemplifying case illustrated in figure 2, the tensioning devices comprise screws and spring elements arranged to tighten the cooling element 204 axially against the yoke 202. In figure 2, one of the screws is denoted with a reference number 208 and one of the spring elements is denoted with a reference number 209. In this exemplifying case, the spring elements are spring washers between the screw-heads and the core structure 201.

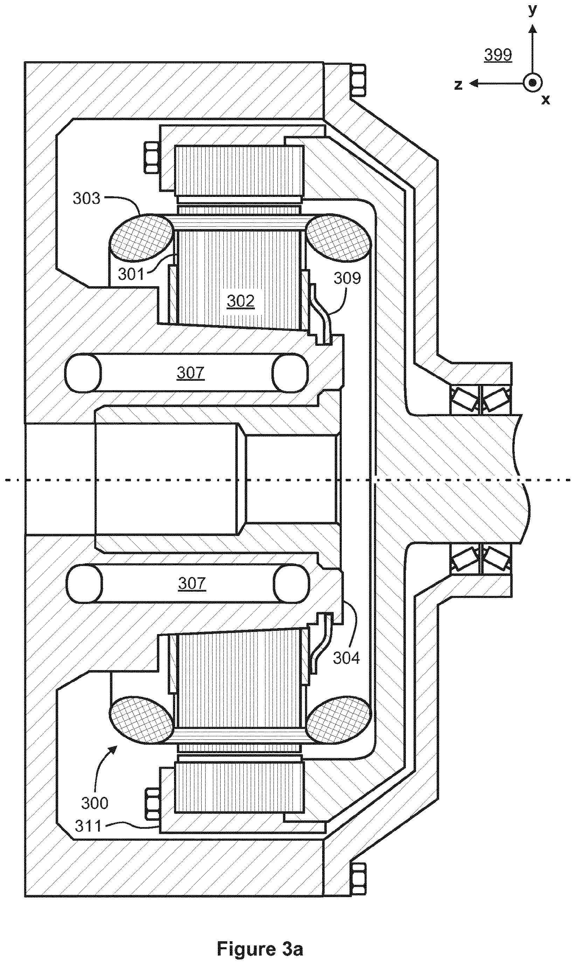

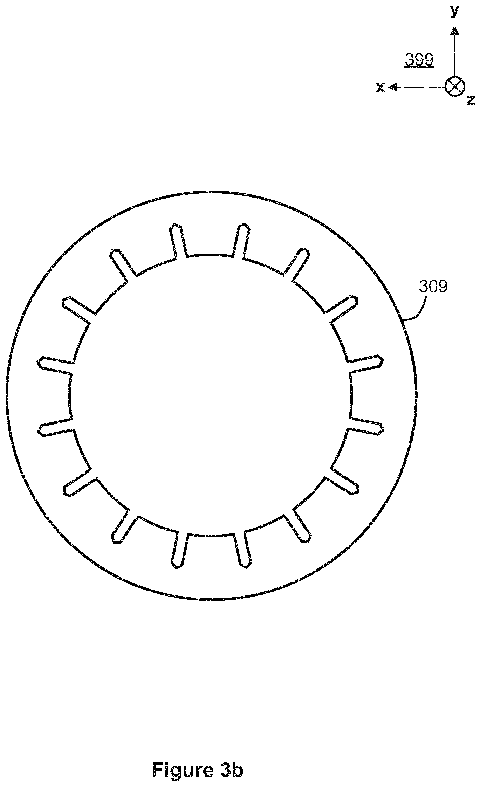

Figure 3a shows a section view of an outer rotor electrical machine according to an exemplifying and non-limiting embodiment of the invention, where the section has been taken along a plane parallel with the yz-plane of a coordinate system 399. The electrical machine comprises a stator 300 and a rotor 311. The rotational axis of the rotor is parallel with the z-axis of the coordinate system 399. The stator 300 comprises a core structure 301 comprising ferromagnetic material. The core structure 301 comprises a yoke 302 and stator teeth connected to the yoke. The stator 300 comprises windings 303 whose coil sides are located in the stator slots between the stator teeth. The stator 300 comprises a cooling element 304 located in a cavity constituted by the yoke 302. The cooling element 304 comprises cooling channels 307 for conducting water or some other suitable cooling fluid. The mutually contacting surfaces of the yoke 302 and the cooling element 304 are conical so as to facilitate arranging a heat conductive relation between the yoke 302 and the cooling element 304. The conical shapes of the mutually contacting surfaces make it possible to maintain the heat conductive relation with the aid of a tensioning device arranged to generate axial force pressing the cooling element 304 against the conical cavity of the yoke 302 in the axial direction. In the exemplifying case illustrated in figure 3a, the tensioning device is a cup spring 309 arranged to tighten the cooling element 304 axially against the yoke 302. A front view of the cup spring 309 is presented in figure 3b. The viewing direction related to figure 3b is illustrated with the aid of the coordinate system 399.

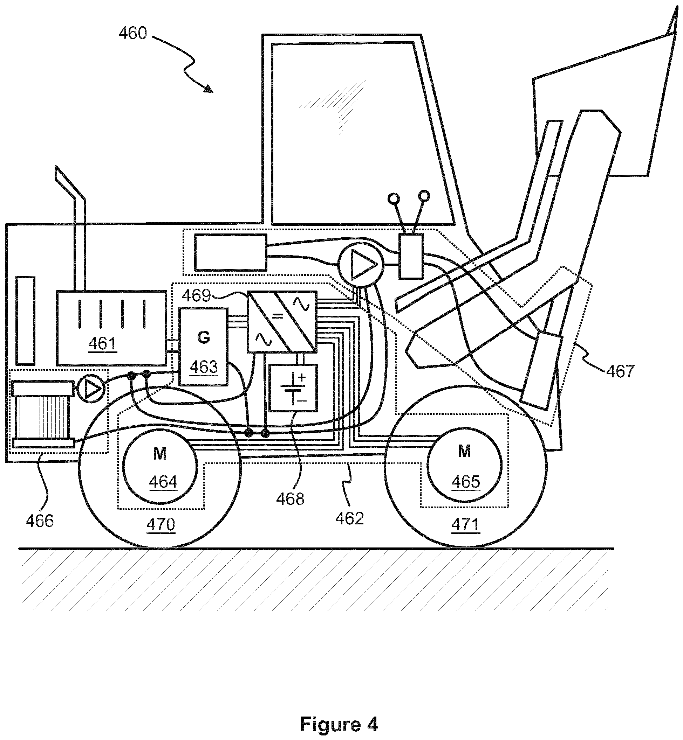

Figure 4 shows a schematic illustration of a working machine 460 according to an exemplifying and non-limiting embodiment of the invention. In this exemplifying case, the working machine is a bucket charger but the working machine could as well be for example a tractor, a road drag, an excavator, a bulldozer, a stone crusher, or a wood chipping machine. The working machine comprises a combustion engine 461 that can be e.g. a diesel engine, an Otto-cycle engine, or a turbine engine. The working machine comprises an electromechanical power transmission chain 462 between the combustion engine 461 and wheels of the working machine. In figure 4, two of the wheels are denoted with reference numbers 470 and 471. The electromechanical power transmission chain comprises a generator 463 the rotor of which is mechanically connected to the shaft of the combustion engine 461. The electromechanical power transmission chain comprises a power electronic converter 469 and electrical motors at the hubs of the wheels of the working machine. The electronic power converter 469 is arranged to convert the electrical voltage produced by the generator 463 into electrical voltages having amplitudes and frequencies suitable for the electrical motors. In figure 4, two of the electrical motors are denoted with reference numbers 464 and 465. Each of the electrical motors is an outer rotor electrical machine whose stator comprises:
- a core structure comprising ferromagnetic material and comprising a yoke and stator teeth connected to the yoke,
- windings at least partially located in the stator slots between the stator teeth, and
- a cooling element located in a cavity constituted by the yoke and being in a heat conductive relation with the yoke, a first surface of the cooling element having a mechanical contact with a second surface of the cavity so as to provide the heat conductive relation.

The above-mentioned first surface of the cooling element and the second surface of the cavity are conical so as to facilitate arranging the mechanical contact between the yoke and the cooling element.

It is also possible that the generator 463 is an outer rotor electrical machine of the kind described above.

A working machine according to an exemplifying and non-limiting embodiment of the invention comprises a liquid cooling system 466 for cooling the electrical motors. The liquid cooling system 466 can be arranged to cool also the other parts of the electromechanical power transmission chain 462, and/or a hydraulic system 467 of the working machine, and/or the combustion engine 461. The above-mentioned other parts of the electromechanical power transmission chain 462 may comprise, among others, the power electronic converter 469 and/or the generator 463.

In a working machine according to an exemplifying and non-limiting embodiment of the invention, the electromechanical power transmission chain comprises a battery 468 and/or an electric double-layer capacitor "EDLC" arranged to respond to peak power needs exceeding the maximum power of the combustion engine 461. The battery and/or the electric double-layer capacitor can be connected for example to a direct voltage intermediate circuit of the power electronic converter 469. An electric double-layer capacitor is often called a "super capacitor".

The specific examples provided in the description given above should not be construed as limiting the applicability and/or the interpretation of the appended claims. Lists and groups of examples provided in the description given above are not exhaustive unless otherwise explicitly stated.

## Claims

1. A stator (100, 200, 300) for an outer rotor electrical machine, the stator comprising:
- a core structure (101, 201, 301) comprising ferromagnetic material and comprising a yoke (102, 202, 302) and stator teeth connected to the yoke,
- windings (103, 203, 303) at least partially located in stator slots between the stator teeth, and
- a cooling element (104, 204, 304) located in a cavity constituted by the yoke and being in a heat conductive relation with the yoke, a first surface of the cooling element having a mechanical contact with a second surface of the cavity so as to provide the heat conductive relation,
**characterized in that** the first surface of the cooling element and the second surface of the cavity are conical.

2. A stator according to claim 1, wherein the cooling element (104, 204, 304) comprises:
- a first section (105) comprising the first surface and made of first material having a first thermal expansion coefficient, and
- a second section (106) radially surrounded by the first section so that the second section has a mechanical contact with the first section,
the second section being made of second material having a second thermal expansion coefficient smaller than the first thermal expansion coefficient so as to act against loosening of the mechanical contact between the first and second surfaces.

3. A stator according to claim 2, wherein the first material comprises aluminum and the second material comprises steel.

4. A stator according to claim 2 or 3, wherein the second section has pretension tending to radially expand the first section.

5. A stator according to any of claims 2-4, wherein the second section is a tubular sleeve located in a cavity of the first section.

6. A stator according to any of claims 2-5, wherein the first section has been cast around the second section.

7. A stator according to any of claims 1-6, wherein the cooling element comprises one or more cooling channels (107, 207, 307) for conducting cooling fluid.

8. A stator according to any of claims 1-7, wherein the stator comprises one or more tensioning devices (108, 208, 209, 309) for generating axial force pressing the cooling element against the yoke so as to maintain the mechanical contact between the conical first and second surfaces.

9. A stator according to claim 8, wherein the tensioning devices comprise one or more screws (108, 208) arranged to tighten the cooling element axially against the yoke so as to maintain the mechanical contact between the conical first and second surfaces.

10. A stator according to claim 8 or 9, wherein the tensioning devices comprise one or more spring elements (209, 309) for generating one or more axial spring forces so as to maintain the mechanical contact between the conical first and second surfaces.

11. A stator according to any of claims 1-10, wherein the cooling element (104) is a part of a frame structure (110) constituting a part of an outer casing of the outer rotor electrical machine.

12. A stator according to any of claims 1-11, wherein the core structure (102, 202, 302) comprises a stack of ferromagnetic sheets electrically insulated from each other and stacked in an axial direction of the stator.

13. A working machine (460) comprising:
- a combustion engine (461),
- one or more functional elements (470, 471) to be driven with mechanical power, and
- an electromechanical power transmission chain (462) between the combustion engine and the one or more functional elements,
wherein the electromechanical transmission chain comprises at least one outer rotor electrical machine (463-465) comprising a stator according to any of claims 1-12 and a rotor.

14. A working machine according to claim 13, wherein the working machine comprises a liquid cooling system (466) connected to one or more cooling channels of the stator of the outer rotor electrical machine.

15. A working machine according to claim 14, wherein the liquid cooling system is configured to cool at least one of the following in addition to the stator of the outer rotor electrical machine: a hydraulic system (467) of the working machine, a power electronic converter (469) of the electromechanical power transmission chain, the combustion engine (461).

## Patentansprüche

1. Stator (100, 200, 300) für eine elektrische Maschine mit Außenläufer, der Stator umfassend:
- eine Kernstruktur (101, 201, 301) umfassend ferromagnetisches Material und umfassend ein Joch (102, 202, 302) und Statorzähne, die mit dem Joch verbunden sind,
- Wicklungen (103, 203, 303), die sich zumindest teilweise in Statorschlitzen zwischen den Statorzähnen befinden, und
- ein Kühlelement (104, 204, 304), das sich in einem Hohlraum befindet, das von dem Joch gebildet wird und in einem wärmeleitenden Verhältnis zu dem Joch steht, wobei eine erste Fläche des Kühlelements einen mechanischen Kontakt mit einer zweiten Fläche des Hohlraums aufweist, um das wärmeleitende Verhältnis zu schaffen,
**dadurch gekennzeichnet, dass** die erste Fläche des Kühlelements und die zweite Fläche des Hohlraums kegelförmig sind.

2. Stator nach Anspruch 1, wobei das Kühlelement (104, 204, 304) Folgendes umfasst:
- einen ersten Abschnitt (105), der die erste Fläche umfasst und aus einem ersten Material mit einem ersten thermischen Ausdehnungskoeffizienten hergestellt ist, und
- einen zweiten Abschnitt (106), der von dem ersten Abschnitt radial umgeben ist, so dass der zweite Abschnitt einen mechanischen Kontakt mit dem ersten Abschnitt aufweist,
wobei der zweite Abschnitt aus einem zweiten Material mit einem zweiten thermischen Ausdehnungskoeffizienten, der kleiner als der erste thermische Ausdehnungskoeffizient ist, hergestellt ist, um einem Lösen des mechanischen Kontakts zwischen der ersten und der zweiten Fläche entgegenzuwirken.

3. Stator nach Anspruch 2, wobei das erste Material Aluminium und das zweite Material Stahl umfasst.

4. Stator nach Anspruch 2 oder 3, wobei der zweite Abschnitt eine Vorspannung aufweist, die darauf abzielt, den ersten Abschnitt radial zu dehnen.

5. Stator nach einem der Ansprüche 2 bis 4, wobei der zweite Abschnitt eine röhrenförmige Hülse ist, die sich in einem Hohlraum des ersten Abschnitts befindet.

6. Stator nach einem der Ansprüche 2 bis 5, wobei der erste Abschnitt um den zweiten Abschnitt herum gegossen wurde.

7. Stator nach einem der Ansprüche 1 bis 6, wobei das Kühlelement einen oder mehrere Kühlkanäle (107, 207, 307) zum Leiten von Kühlfluid umfasst.

8. Stator nach einem der Ansprüche 1 bis 7, wobei der Stator eine oder mehrere Spannvorrichtungen (108, 208, 209, 309) zum Erzeugen einer axialen Kraft umfasst, die das Kühlelement gegen das Joch presst, um den mechanischen Kontakt zwischen der kegelförmigen ersten und der kegelförmigen zweiten Fläche beizubehalten.

9. Stator nach Anspruch 8, wobei die Spannvorrichtungen eine oder mehrere Schrauben (108, 208) umfassen, die angeordnet sind, das Kühlelement axial gegen das Joch zu spannen, um den mechanischen Kontakt zwischen der kegelförmigen ersten und der kegelförmigen zweiten Fläche beizubehalten.

10. Stator nach Anspruch 8 oder 9, wobei die Spannvorrichtungen ein oder mehrere Federelemente (209, 309) zur Erzeugung einer oder mehrerer axialer Federkräfte umfassen, um den mechanischen Kontakt zwischen der kegelförmigen ersten und der kegelförmigen zweiten Fläche beizubehalten.

11. Stator nach einem der Ansprüche 1 bis 10, wobei das Kühlelement (104) ein Teil einer Rahmenstruktur (110) ist, die einen Teil eines Außengehäuses der elektrischen Maschine mit Außenläufer bildet.

12. Stator nach einem der Ansprüche 1 bis 11, wobei die Kernstruktur (102, 202, 302) einen Stapel ferromagnetischer Bleche umfasst, die voneinander elektrisch isoliert und in einer axialen Richtung des Stators gestapelt sind.

13. Arbeitsmaschine (460), umfassend:
- einen Verbrennungsmotor (461),
- ein oder mehrere Funktionselemente (470, 471), die mit mechanischer Leistung anzutreiben sind, und
- einen elektromechanischen Antriebsstrang (462) zwischen dem Verbrennungsmotor und dem einen oder den mehreren Funktionselementen,
wobei der elektromechanische Antriebsstrang mindestens eine elektrische Maschine mit Außenläufer (463 bis 465) umfassend einen Stator nach einem der Ansprüche 1 bis 12 und einen Läufer umfasst.

14. Arbeitsmaschine nach Anspruch 13, wobei die Arbeitsmaschine ein Flüssigkeitskühlsystem (466) umfasst, das mit einem oder mehreren Kühlkanälen des Stators der elektrischen Maschine mit Außenläufer verbunden ist.

15. Arbeitsmaschine nach Anspruch 14, wobei das Flüssigkeitskühlsystem ausgelegt ist, mindestens eins des Folgenden zusätzlich zu dem Stator der elektrischen Maschine mit Außenläufer zu kühlen: ein Hydrauliksystem (467) der Arbeitsmaschine, einen Leistungselektronik-Konverter (469) des elektromechanischen Antriebsstrangs, den Verbrennungsmotor (461).

## Revendications

1. Stator (100, 200, 300) pour une machine électrique à rotor extérieur, le stator comprenant :
- une structure de noyau (101, 201, 301) comprenant un matériau ferromagnétique et comprenant une culasse (102, 202, 302) et des dents de stator reliées à la culasse,
- des enroulements (103, 203, 303) au moins partiellement situés dans des fentes de stator entre les dents de stator, et
- un élément de refroidissement (104, 204, 304) situé dans une cavité formée par la culasse et étant dans une relation de conduction de chaleur avec la culasse, une première surface de l'élément de refroidissement présentant un contact mécanique avec une deuxième surface de la cavité de manière à fournir la relation de conduction de chaleur,
**caractérisé en ce que** la première surface de l'élément de refroidissement et la deuxième surface de la cavité sont coniques.

2. Stator selon la revendication 1, dans lequel l'élément de refroidissement (104, 204, 304) comprend :
- une première section (105) comprenant la première surface et constituée d'un premier matériau présentant un premier coefficient de dilatation thermique, et
- une deuxième section (106) entourée radialement par la première section, de telle façon que la deuxième section présente un contact mécanique avec la première section,
la deuxième section étant constituée d'un deuxième matériau présentant un deuxième coefficient de dilatation thermique inférieur au premier coefficient de dilatation thermique, de manière à empêcher le détachement du contact mécanique entre les première et deuxième surfaces.

3. Stator selon la revendication 2, dans lequel le premier matériau comprend de l'aluminium et le deuxième matériau comprend de l'acier.

4. Stator selon la revendication 2 ou 3, dans lequel la deuxième section présente une précontrainte tendant à dilater radialement la première section.

5. Stator selon l'une quelconque des revendications 2 à 4, dans lequel la deuxième section est un manchon tubulaire situé dans une cavité de la première section.

6. Stator selon l'une quelconque des revendications 2 à 5, dans lequel la première section a été coulée autour de la deuxième section.

7. Stator selon l'une quelconque des revendications 1 à 6, dans lequel l'élément de refroidissement comprend un ou plusieurs canaux de refroidissement (107, 207, 307) pour la conduction d'un fluide de refroidissement.

8. Stator selon l'une quelconque des revendications 1 à 7, dans lequel le stator comprend un ou plusieurs dispositifs de serrage (108, 208, 209, 309) destinés à générer une force axiale pressant l'élément de refroidissement contre la culasse de manière à maintenir le contact mécanique entre les première et deuxième surfaces coniques.

9. Stator selon la revendication 8, dans lequel les dispositifs de serrage comprennent une ou plusieurs vis (108, 208) conçues pour serrer l'élément de refroidissement axialement contre la culasse, de manière à maintenir le contact mécanique entre les première et deuxième surfaces coniques.

10. Stator selon la revendication 8 ou 9, dans lequel les dispositifs de serrage comprennent un ou plusieurs éléments de ressort (209, 309) destinés à générer une ou plusieurs forces de ressort axiales, de manière à maintenir le contact mécanique entre les première et deuxième surfaces coniques.

11. Stator selon l'une quelconque des revendications 1 à 10, dans lequel l'élément de refroidissement (104) est une partie d'une structure de cadre (110) constituant une partie d'un boîtier extérieur de la machine électrique à rotor extérieur.

12. Stator selon l'une quelconque des revendications 1 à 11, dans lequel la structure de noyau (102, 202, 302) comprend une pile de feuilles ferromagnétiques électriquement isolées les unes des autres et empilées dans une direction axiale du stator.

13. Machine-outil (460) comprenant :
- un moteur à combustion (461),
- un ou plusieurs éléments fonctionnels (470, 471) destinés à être entraînés avec une puissance mécanique, et
- une chaîne de transmission de puissance électromécanique (462) entre le moteur à combustion et les un ou plusieurs éléments fonctionnels,
dans laquelle la chaîne de transmission de puissance électromécanique comprend au moins une machine électrique à rotor extérieur (463 à 465) comprenant un stator selon l'une quelconque des revendications 1 à 12 et un rotor.

14. Machine-outil selon la revendication 13, dans laquelle la machine-outil comprend un système de refroidissement de liquide (466) relié à un ou plusieurs canaux de refroidissement du stator de la machine électrique à rotor extérieur.

15. Machine-outil selon la revendication 14, dans laquelle le système de refroidissement de liquide est configuré pour refroidir au moins l'un des éléments suivants, en plus du stator de la machine électrique à rotor extérieur : un système hydraulique (467) de la machine-outil, un convertisseur électronique de puissance (469) de la chaîne de transmission de puissance électromécanique, le moteur à combustion (461) .
